Europäisches Patentamt

European Patent Office

Office européen des brevets

(19)

(11) **EP 1 399 239 B1**

(12) **EUROPÄISCHE PATENTSCHRIFT**

(45) Veröffentlichungstag und Bekanntmachung des Hinweises auf die Patenterteilung:
**16.03.2005 Patentblatt 2005/11**

(21) Anmeldenummer: 02762292.7

(22) Anmeldetag: **18.06.2002**

(51) Int Cl.⁷: **B01D 46/24**

(86) Internationale Anmeldenummer:
**PCT/EP2002/006724**

(87) Internationale Veröffentlichungsnummer:
**WO 2002/102493 (27.12.2002 Gazette 2002/52)**

(54) **MIT RUSSABBRENNUNG ARBEITENDER PARTIKELFILTER FÜR DIESELMOTOREN**

PARTICLE FILTER OPERATING BY MEANS OF SOOT COMBUSTION AND USED FOR DIESEL ENGINES

FILTRE A PARTICULES FONCTIONNANT SUR LA BASE DE LA COMBUSTION DE SUIE POUR MOTEURS DIESEL

(84) Benannte Vertragsstaaten:
**DE ES FR GB IT**

(30) Priorität: **18.06.2001 DE 10128938
18.06.2001 DE 10128936
25.05.2002 DE 10223452**

(43) Veröffentlichungstag der Anmeldung:
**24.03.2004 Patentblatt 2004/13**

(73) Patentinhaber: **HJS Fahrzeugtechnik GmbH & Co.
58706 Menden (DE)**

(72) Erfinder:
• **FRÄNKLE, Gerhard, Jürgen
73630 Remshalden (DE)**
• **SCHULTE, Hermann, Josef
58710 Menden (DE)**
• **FRISSE, Hans, Peter
52134 Herzogenrath (Niederbardenberg) (DE)**
• **JUTKA, Carsten
58710 Menden (DE)**
• **KOLL, Jochen
59755 Arnsberg (DE)**
• **SCHREWE, Klaus
59602 Rüthen (DE)**

(74) Vertreter: **Wittner, Walter et al
Wittner & Müller
Patentanwälte
Am Ochsenberg 16
73614 Schorndorf (DE)**

(56) Entgegenhaltungen:
EP-A- 0 837 228          DE-C- 3 637 516
US-A- 4 359 864          US-A- 4 641 496
US-A- 5 782 941

• **PATENT ABSTRACTS OF JAPAN vol. 008, no. 136 (M-304), 23. Juni 1984 (1984-06-23) & JP 59 037224 A (NIPPON TOKUSHU TOGYO KK), 29. Februar 1984 (1984-02-29)**

EP 1 399 239 B1

**Beschreibung**

Die Erfindung betrifft einen mit Rußabbrennung arbeitenden Partikelfilter für Dieselmotoren gemäß dem Oberbegriff des Anspruches 1.

Aus der US 4,641,496 A ist ein Partikelfilter der vorgenannten Art bekannt. Dieser weist einen aus keramischem Filtermaterial bestehenden Filterkörper mit axial verlaufenden, bienenwabenförmig zueinander angeordneten Kanälen auf, von denen aneinander angrenzende abwechselnd an ihren axial einander gegenüberliegenden Enden geschlossen sind und deren Wände Filterflächen bilden, so dass aus den anströmseitig offenen, mit Rohgas beaufschlagten Eintrittskanälen das Abgas, unter Abscheiden der Verunreinigungen auf den entsprechenden Kanalwänden, auf die abströmseitig offenen Austrittskanäle übertritt.

Die Ein- und Austrittsöffnungsquerschnitte der Kanäle liegen jeweils in einer Ebene, und die Eintrittsöffnungsquerschnitte der mit Rohgas beaufschlagten Eintrittskanäle bestimmen eine Eintrittsebene, von der ein Sektor von einem stromauf vorgelagerten, kontinuierlich umlaufenden Heizstrahler als Heizquelle überdeckt ist. Der Heizstrahler liegt hinter einer anströmseitig vorgesehenen Abschirmung, die zur Eintrittsebene einen geringen Abstand aufweist, so dass, ungeachtet von in der Abschirmung vorgesehenen kleinen Durchtrittsöffnungen, der von der Abschirmung jeweils überdeckte Bereich als für den Abgasstrom weitgehend nicht zur Verfügung stehender, stillgelegter Filterbereich zu sehen ist, in dem lediglich die Rußabbrennung erfolgt.

Entsprechend dem kontinuierlichen Umlauf des Heizstrahlers ist eine kontinuierliche Beheizung und Rußabbrennung gegeben, die in dem durch die Abschirmung jeweils überdeckten Bereich zur Rußabbrennung von der Eintrittsseite zur Austrittsseite unter Fortpflanzung der Flammfront in den in den Eintrittskanälen wandseitig abgelagerten Rußschichten erfolgt.

Die kontinuierliche Beheizung bedingt einen entsprechenden Energiebedarf. Die Rotation des Heizstrahlers ist in Anbetracht der Umgebungsbedingungen mit erheblichem mechanischen Aufwand verbunden, und bedingt durch den von der Abschirmung jeweils überdeckten Filterbereich steht, unabhängig von der Rußbelegung, jeweils auch nur ein Teil der Gesamtfilterfläche für die Filterfunktion zur Verfügung.

Ferner sind aus der DE 198 10 738 C1 Partikelfilter mit flachen, längs des Außenumfangs geschlossenen Filtertaschen aus Sintermetallblech bekannt, die senkrecht zur Taschenebene übereinander gestapelt sind und, im Randbereich ihrer zentralen Taschenöffnungen miteinander verbunden, einen Filterkörper bilden. Dieser Filterkörper wird über die Taschenöffnungen zentral mit Rohgas angeströmt und in Richtung der Taschenebenen zwischen den Taschen vom Heißgas eines Brenners überströmt, so dass sich Heißgas und Reingas zwischen den Taschen vermischen und die Taschen ausgehend von den Außenseiten ihrer Taschenwände aufheizen, womit eine für die Rußabbrennung ausreichende Temperatur erreicht wird.

Partikelfilter dieser Art sind im praktischen Einsatz und genügen den funktionalen Anforderungen, sind aufgrund der konstruktiven Gestaltung in Verbindung mit Verwendung eines Brenners aber aufwendig und auch raumintensiv, so dass insbesondere der Verwendung in Abgasanlagen von Personenkraftwagen Grenzen gesetzt sind.

Bei einem weiteren bekannten, mit Rußabbrennung arbeitenden Partikelfilter (EP 0 650 551 B1) wird mit elektrischer Beheizung eines sintermetallischen Filterkörpers gearbeitet, an dem die Rußabscheidung erfolgt. Hierfür ist anström- bzw. rohgasseitig dem Filterkörper eine Sprühelektrode vorgelagert, über die eine Aufladung der Partikel, bzw. eine Agglomeration derselben erreicht wird, und es erfolgt die Partikelabscheidung auf der Filterfläche sowohl mechanisch wie auch elektrostatisch, da der Filterkörper als Niederschlagselektrode wirkt. Zur Regeneration des so beladenen Filters wird über den Filterkörper zeitweise ein elektrischer Strom geleitet und der Filterkörper als Widerstandselement dadurch auf Zündtemperatur erwärmt.

Daneben sind noch eine Vielzahl weiterer, zur Rußabbrennung mit elektrischer Beheizung arbeitender Partikelfilter für Dieselmotoren bekannt, teils in Verbindung mit Filterkörpern, die Filterflächen aus Sintermetall aufweisen (DE 195 03 067 A1, EP 0 849 444 A2), teils mit anderweitigen metallischen Filterkörpern (EP 0 837 228 A2) und teils mit keramischen, insbesondere in Form von Wabenfiltern ausgebildeten Filterkörpern (DE 36 08 801 A1, EP 0 485 974 B1). Bei diesen wird teilweise die elektrische Beheizung im Bereich der rohgasseitigen Einmündung der Abgase durch in die Eintrittskanäle gelegte Widerstandsheizdrähte angestrebt mit dem Ziel, dass nach dem Entzünden des Rußes am Kanalanfang die Flammfront in Richtung zum Kanalende weiter fortbrennt, somit die Abbrennung ausgehend von der Rohgasseite entsprechend dem Verlauf der Durchströmung in Richtung auf die Reingasseite verläuft. Überlagert, oder auch unabhängig zu der durch die elektrische Beheizung geförderten Rußabbrennung, werden teilweise chemische, die Reaktion fördernde Mittel eingesetzt, wie auch die Möglichkeiten innermotorischer Maßnahmen zur Temperaturanhebung der Abgase und/oder motorische Betriebsweisen im Sinne der Förderung der Rußabbrennung genutzt.

Ferner sind Staubfilter für industrielle Zwecke aus der DE 36 37 516 C1 bekannt. Diese sind nach Art von Schlauchfiltern gestaltet, deren schlauchförmige Filterkörper, von außen mit Rohgas angeströmt, rohgasseitig geschlossen sind und reingasseitig offene, endseitige Abströmöffnungen aufweisen. Im Bereich dieser Abströmöffnungen sind die schlauchförmigen Filterkörper an einer die Abgasseite von der Rohgasseite abgrenzenden Trennwand befestigt. Die einzelnen Filterkörper sind aus im Querschnitt dreiecksförmigen Filtertaschen aufgebaut, die sich in Richtung ihrer Längserstreckung gegen die Rohgasseite sowie in radialer Richtung keilförmig verjüngen und in diesen Richtungen geschlossen sind. Die die reingasseitigen Abströmöffnungen bildenden Taschenöffnungen liegen im Bereich der Trennwand, an der die einzelnen Filterkörper befestigt sind. Zur Reinigung des stehend angeordneten Staubfilters ist eine Gegenstromspüleinrichtung vorgesehen, durch die der rohgasseitig an den Filterwänden der Filterkörper angelagerte Staub abgeblasen, im unteren Teil des Filtergehäuses gesammelt und über einen Staubaustrag abgezogen werden kann.

Der Erfindung liegt die Aufgabe zugrunde, mit Rußabbrennung arbeitende Partikelfilter für Dieselmotoren dahingehend weiterzubilden, dass die Vorteile sintermetallischer Filterflächen für die Partikelabscheidung und die Regeneration durch Abbrennen des Rußes genutzt werden können, und zwar bei minimiertem Energieverbrauch, hohem Abbrenngrad und vorteilhaften, wirtschaftlichen Fertigungsvoraussetzungen.

Erreicht wird dies gemäß der Erfindung mit den kennzeichnenden Merkmalen des Anspruches 1, demzufolge mit der elektrischen Aufheizung lediglich eines Bruchteiles, insbesondere eines kleinen Bruchteiles der sintermetallischen Filterfläche gearbeitet wird, und zwar bei berührungsfreier Heizeinwirkung von der Rohgasseite aus, so dass für die Entflammung des Rußes beste Voraussetzungen gegeben sind, insbesondere etwaige Zusatzmaßnahmen, seien sie motorischer oder sonstiger Art zur Temperaturanhebung auf der Rohgasseite oder zur Förderung der Verbrennung mit anderen, zum Beispiel chemischen Mitteln zusammen mit der Heizleistung direkt wirksam werden können und damit gegebenenfalls auch zusätzlich fördernd beim Abbrennen des Rußbelages aufgrund der durch die elektrische Beheizung ausgelösten Entflammung wirksam sind. Insbesondere werden mit der berührungsfreien elektrischen Beheizung auch die konstruktiven Voraussetzungen verbessert, sei es hinsichtlich der Flexibilität in der Anordnung, des Raumbedarfes, hinsichtlich der Gewährleistung eines störungsfreien Langzeitbetriebes sowie auch der elektrischen Betriebssicherheit. Ferner wird die Gestaltungsfreiheit und der Aufwand für den Filterkörper positiv beeinflusst, da eine von der Heizquelle unabhängige Fertigung, gegebenenfalls ein modularer Aufbau möglich wird, vor allem auch die thermisch extremen Belastungen beim Abbrennen des Rußes von den Filterflächen und auf den Filterflächen in ihren Auswirkungen auf die elektrische Heizquelle und deren konstruktive Gestaltung verringert werden können.

Durch die Erfindung wird somit eine Lösung angeboten, die bei reduziertem Aufwand eine Verringerung des Heizenergiebedarfs ermöglicht und die zudem auch besonders günstige Möglichkeiten für den effektiven Einsatz sonstiger, die Rußabbrennung fördernder Maßnahmen eröffnet, da die berührungsfreie Einbringung der Heizleistung für die Gestaltung und Unterbringung der Heizquelle, auch hinsichtlich erforderlicher Sicherheitsmaßnahmen, wie beispielsweise der Isolierung, Vorteile erbringt.

Aufgrund der berührungsfreien Einwirkung der insbesondere durch wenigstens einen Heizstrahler, gegebenenfalls auch durch wenigstens einen Laserstrahler gebildeten Heizquelle lässt sich bei geringem Energiebedarf die notwendige hohe, zur sicheren Entflammung erforderliche, flächenspezifische Heizleistung ohne direkten Zugriff auf die Filterfläche erreichen, wobei gegebenenfalls in Verbindung mit herkömmlichen Heizstrahlern Reflektoren eingesetzt werden können. Abgesehen von der Reflexionswirkung können sich entsprechende Abschirmungen auch als vorteilhaft erweisen, um die Rußbelegung der Filterfläche im Einstrahlbereich durch Leit- oder Abfangfunktion zu beeinflussen und dadurch, weiterhin berührungslos zum Filterkörper, die Voraussetzungen für die Entflammung und eine sichere Rußabbrennung zu verbessern.

Die elektrische, berührungsfreie Beheizung erbringt besondere Vorteile in Verbindung mit Filterkörpern, die aus keilförmigen Filtertaschen aufgebaut sind, die bezüglich ihres Öffnungsquerschnittes einer gemeinsamen Ebene zugewandt sind, so dass das Rohgas gegen die geschlossenen, keilschneidenartigen Filterenden anströmt und die sintermetallische Filterflächen aufweisenden.Filtertaschen quasi igelartig sich dem Rohgas entgegenstellen, das entlang der Filterflächen in die durch die Keiltaschen begrenzten Gegenräume einströmt, sich in diesen fängt und über die Filterflächen in Richtung der jeweiligen Filtertaschenöffnung abströmt.

Dadurch, dass die Filtertaschen bei dreiecksförmigem Querschnitt ihrer stirnseitigen Öffnung mit ihren durch die Schenkel gebildeten Seitenflächen sowohl in Längsrichtung wie auch in Hochrichtung des dreiecksförmigen Querschnittes schneidenartig zusammenlaufen, lassen sich bei großen Filterflächen Filterkörper mit regelmäßiger Umfangskontur, sei es Kreiskontur oder Ovalkontur, wie auch mit unregelmäßigen Konturen aufbauen lassen. Insbesondere bei den angesprochenen kreisförmigen oder ovalen, oder diesen Formen angenäherten Konturen bestehen sehr günstige Verhältnisse.

Bei einem solchen Aufbau eines Sintermetall-Partikelfilters, dessen reingasseitige Taschenöffnungen - einer gemeinsamen Ebene zugewandt - den stirnseitigen, dreiecksförmigen Querschnitten der Filtertaschen zugeordnet sind und dessen Filtertaschen sich keilförmig in Richtung auf das gemeinsame Zentrum wie auch keilförmig in Längserstreckung, d. h. axial gegen die Rohgasseite erstrecken, erfolgt die rohgasseitige elektrisch berührungslose Beheizung im gegen die Taschenebene auslaufenden, bezogen auf das Zentrum außen liegenden Längsbereich der Filtertaschen, und zwar bevorzugt bei Konzentration der Heizleistung auf einen mehrere Filtertaschen umfassenden Sektor des Filterkörpers. Vorrangig erfolgt die Beheizung der Rückenflächen der Filtertaschen. Bezüglich der Anordnung der Heizelemente in der Zuordnung zum Filterkörper ergeben sich dadurch Vorteile, wobei sich hinsichtlich der Konzentration der Heizleistung auf den gegen die Ebene der Taschenöffnungen auslaufenden Bereich einer Teillänge der Filtertaschen überraschenderweise gezeigt hat, dass dort nicht nur die Bedingungen für die Entflammung ausgehend von einer flächenkleinen Zündfläche besonders günstig sind, sondern dass von diesem Bereich ausgehend entgegen der Anströmrichtung auch die Abbrennung des Rußes durch Flammfrontfortpflanzung in der Rußschicht sehr effektiv abläuft.

Aus Platzgründen, sowie auch wegen der Möglichkeit der gleichzeitigen Einwirkung auf einander gegenüberliegende Filterflächen kann allerdings eine Anordnung der Heizelemente auch derart zweckmäßig sein, dass diese in die zwischen aufeinander folgende Filtertaschen liegenden rohgasseitigen Gegenräume hineingreifen.

Insbesondere ist es in Verbindung mit der vorgesehenen, berührungsfreien Einwirkung der Heizquelle zweckmäßig, die Heizleistung auf eine flächenkleine Zündzone zu beschränken, und zwar bei spezifischen Heizleistungen in der Größenordnung von 20 - 100 kW/m$^2$, insbesondere von etwa 60 kW/m$^2$, wobei die Fläche der Zündzone bevorzugt etwa der Fläche des Rückenbereiches der beaufschlagten Filtertaschen im beaufschlagten Längsbereich derselben entsprechen kann. Bezogen auf die gesamte Filterfläche bedeutet dies eine spezifische Heizleistung in der Größenordnung von 0,8 - 1,6 kW/m$^2$. Mit der Konzentration der eingesetzten Heizenergie auf flächenkleine Zündflächen sowie der damit verbundenen Möglichkeit, bei kurzen, insbesondere im Bereich weniger Minuten liegenden Heizzeiten eine sichere Entflammung zu gewährleisten, die sich durch Abbrennen des Rußes, in Abhängigkeit von der Rußbelegung, zumindest über einen Großteil der rußbelegten Filterflächen fortsetzt, und zwar durch Flammfrontfortpflanzung in der Rußschicht, ergibt sich für den erfindungsgemäßen Partikelfilter insgesamt eine Lösung, bei der der Bedarf an zusätzlich durch Fremdbeheizung aufzubringender Heizenergie gering ist und in einem auch für die Leistungsfähigkeit der elektrischen Anlage von Personenkraftwagen verträglichen Bereich liegt.

Insbesondere in Berücksichtigung dessen, dass im Rahmen der Erfindung über die Filterfläche, insbesondere über den Filterumfang verteilt, mehrere Heizquellen in erfindungsgemäßer Weise auf den Filterkörper bzw. dessen Filtertaschen einwirkend vorgesehen werden können, und dass bei der erfindungsgemäßen Lösung die Heizquellen, zeitlich gesteuert, sowohl gleichzeitig wie auch zeitlich versetzt, aktiviert werden können, lässt sich neben dem durch die Erfindung erreichten, mit besonders gutem Wirkungsgrad erfolgenden Energieeinsatz auch eine Minimierung der erforderlichen Filterflächen erreichen, wobei die Ausgestaltung als Keilfilter hierfür besonders günstige Voraussetzungen bietet und wobei durch die Nutzung bevorzugt unabhängig angesteuerter und/oder versorgter Heizquellen auch die Betriebssicherheit erhöht wird.

Weitere Möglichkeiten zur Reduzierung der notwendigen Fremdheizleistung sind im Rahmen der Erfindung durch die wechselseite Abstimmung von Rußverbrennung und motorischen Betriebsweisen möglich, sei es, dass diese Betriebsweisen durch den jeweiligen Fahrbetrieb bedingt sind, sei es, dass diese Betriebsweisen durch zum fahrzustandsabhängigen Motorbetrieb überlagernde Eingriffe erreicht werden, so beispielsweise durch eine gezielte Anhebung der Einspritzmenge oder dergleichen. Insbesondere erweist es sich auch als vorteilhaft, für das Wechselspiel zwischen Rußabbrennung und Motorbetrieb Fahrzustands- und/oder Fahrverhaltenskollektive zu berücksichtigen. Wird das über einen Zeitraum insbesondere fortschreitend erfasste, und damit auch fortlaufend oder in Intervallen angepasste Fahrverhalten des Fahrers eines jeweiligen Fahrzeuges berücksichtigt, so wird damit zugleich auch den Besonderheiten der jeweiligen Strecke Rechnung getragen. Da die Durchführung der Rußabbrennung in der Regel nicht zu einem bestimmten Zeitpunkt erforderlich ist, sondern ein relativ großes Zeitintervall zur Verfügung steht, lässt sich auch auf diesem Wege die Rußabbrennung fördern und insbesondere zeitlich zweckmäßig in das Betriebsgeschehen integrieren.

Insgesamt steht eine Vielzahl von Möglichkeiten offen, die im Rahmen der Erfindung zusätzlich bei der Steuerung der Rußabbrennung berücksichtigt und zur Minimierung der erforderlichen Heizleistung sowie zur Verbesserung der Rußabbrennung genutzt werden können. Hierzu zählt beispielsweise auch eine Steuerung in Abhängigkeit vom Sauerstoffgehalt der Abgase, der über eine λ-Sonde erfasst wird oder werden kann, eine Beeinflussung der Motordrehzahl durch entsprechende Eingriffe in die Getriebesteuerung, die Nutzung der Abgasrückführung, die Zuführung von Zusatzluft, die beispielsweise von der Ladeluft bei aufgeladenem Motor abgezweigt werden kann und dergleichen.

Weitere Einzelheiten und Merkmale der Erfindung ergeben sich aus den Ansprüchen. Ferner wird die Erfindung nachstehend anhand von Ausführungsbeispielen erläutert. Es zeigen:

Fig. 1   im Schema einen Dieselmotor mit abtriebsseitig nachgeordneten Getriebe und im Abgastrang liegendem, mit Rußabbrennung arbeitendem Partikelfilter sowie einem Steuergerät, über das der Motor und die angesprochenen Aggregate funktional verknüpft sind,

Fig. 2   eine perspektivische schematisierte Darstellung des Filterkörpers eines mit Rußabbrennung arbeitenden Partikelfilters, dessen Filterkörper aus Filtertaschen mit Filterflächen aus Sintermetall aufgebaut ist,

| Fig. 3 | einen Ausschnitt aus einem Filterkörper gemäß Fig. 2, in dem lediglich eine Filtertasche dargestellt ist, |
| --- | --- |
| Fig. 4 und 5 | in seitlicher Außenansicht und in Draufsicht schematisiert die Zuordnung von Heizelementen zu Filtertaschen eines Keilfilters gemäß Fig. 2 und 3, sowie |
| Fig.6 und 7, 8 und 9 sowie 10 und 11 | jeweils den Fig. 4 und 5 entsprechende Darstellungen in Verbindung mit weiteren Ausbildungen und Anordnungen von Heizelementen in Zuordnung zu den Keiltaschen. |

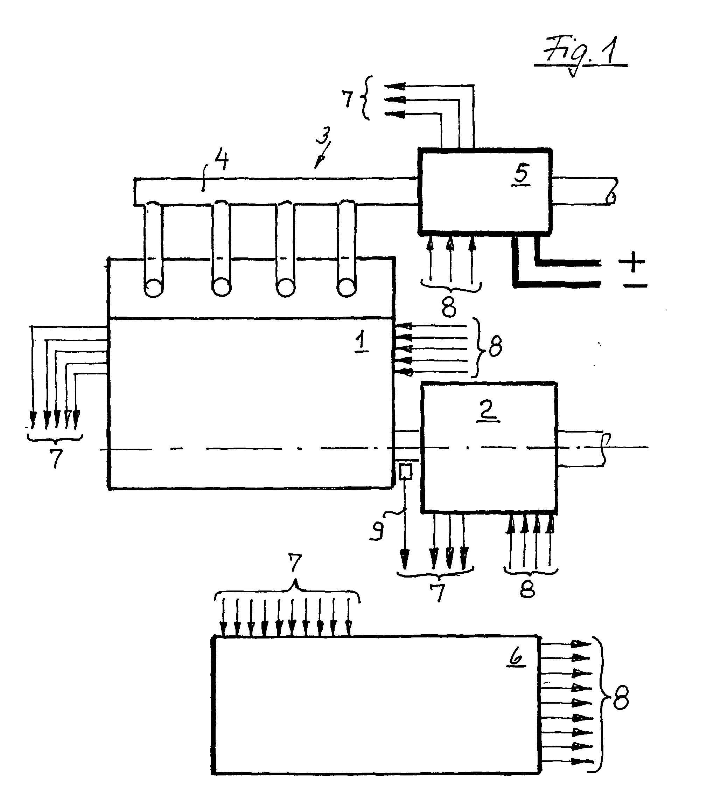

In der Schemadarstellung gemäß Fig. 1 ist als Brennkraftmaschine ein Dieselmotor 1 gezeigt, dem im Triebstrang eine Getriebeeinheit 2 nachgeordnet ist, und der einen Abgasstrang 3 aufweist, in dessen Abgasleitung 4 ein als Rußabbrennfilter arbeitender Partikelfilter 5 angeordnet ist. Ferner ist ein Steuergerät 6 veranschaulicht, das als Steuer- und Rechnereinheit ausgebildet sein kann und in dem, wie durch die Pfeile angedeutet, seitens des Dieselmotores 1, der Getriebeeinheit 2 und des Partikelfilters 5 erfasste Mess- und Steuersignale in Steuerbefehle für den Betrieb von Motor 1, Getriebeeinheit 2, Partikelfilter 5 und sonstige hier nicht dargestellte Elemente eines nicht gezeigten Fahrzeuges umgesetzt werden, die auch ihrerseits eingangsseitig mit dem Steuergerät 6 verknüpft sein können. Die dem Steuergerät 6 zugeleiteten Signale sind durch die Pfeile 7, die vom Steuergerät 6 ausgehenden Signale durch Pfeile 8 veranschaulicht. Zu den vom Steuergerät 6 erfassten Signalen gehört unter anderem auch ein abtriebsseitig abgegriffenes Drehzahlsignal 9. Baulich kann in die vereinfachend durch den Dieselmotor 1, die Getriebeeinheit 2 und den Partikelfilter 5 dargestellte Antriebseinheit insbesondere noch ein im Abgasstrang 3 liegender Abgasturbolader integriert sein, und beispielsweise auch ein Starteraggregat in Form einer Starter-Generatoreinheit, die generatorseitig in Abhängigkeit von den Betriebsbedingungen des Fahrzeuges angetrieben wird, so insbesondere beispielsweise im Bremsbetrieb, um die Bremsenergie in elektrische Energie umzusetzen, wie sie im Rahmen der dargestellten erfindungsgemäßen Lösung mit elektrischer Beheizung des Partikelfilters als zusätzlichem Verbraucher in erhöhtem Maße benötigt wird. Die diesbezüglichen elektrischen Anschlüsse des Partikelfilters sind symbolisch mit +/- angedeutet.

Über das Steuergerät 6 lassen sich des Weiteren das Fahrverhalten des Fahrers eines jeweiligen Fahrzeuges charakterisierende Fahrdaten und gegebenenfalls auch, insbesondere in Verbindung mit Routenführungs- und Verkehrsleitsystemen, Streckenprofile und den Verkehrsfluss beschreibende Daten verarbeiten und in Steuersignale umsetzen, so beispielsweise in Steuersignale für spezielle Getriebeschaltprogramme wie auch in den Betrieb des Partikelfilters zur Rußabbrennung in Koordination zum motorischen Betrieb steuernde Programme. So lassen sich beispielsweise auch Steuergrößen ermitteln und umsetzen, die die Rußabbrennung in Berücksichtigung der für von aufgegangene Zeiträume erfassten Betriebszustände steuern.

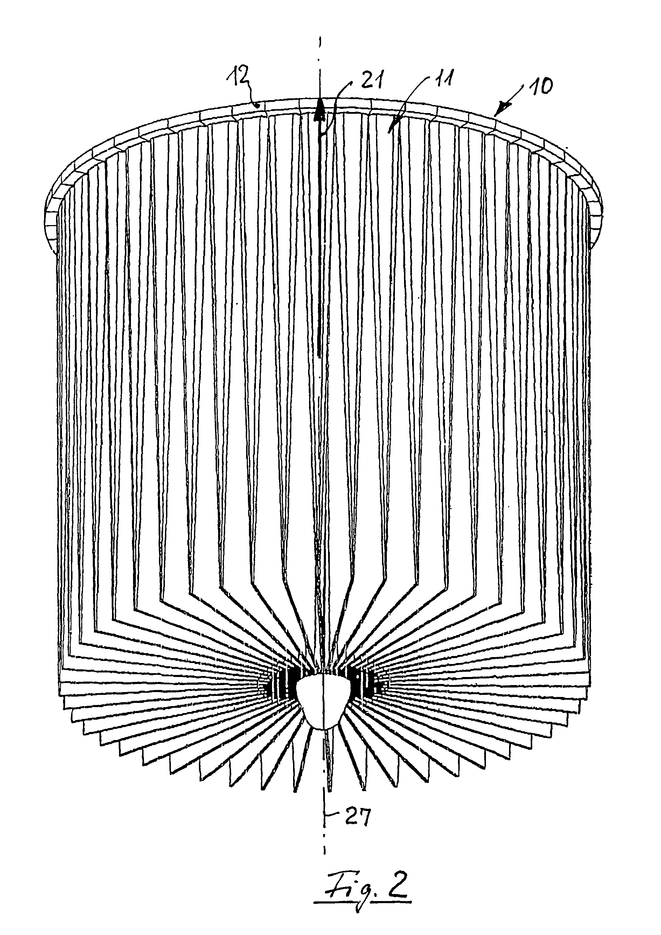

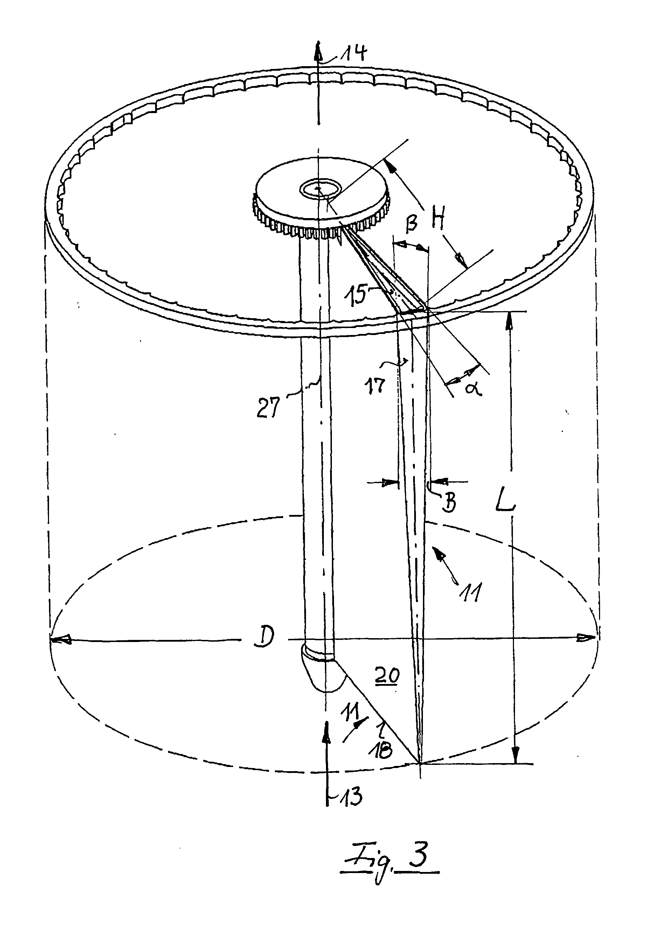

Als mit Rußabbrennung arbeitender, sintermetallischer Partikelfilter ist im Rahmen der Erfindung bevorzugt ein Sintermetallfilter vorgesehen, dessen Filterkörper 10 (Fig. 2) aus Filtertaschen 11 aufgebaut ist, die bei dreiecksförmiger Kontur in zumindest einer, bevorzugt zwei Keilschneiden auslaufen, welche senkrecht zueinander stehenden, aneinander anschließenden Kanten der Filtertasche 11 zugeordnet sind. Nicht dargestellt ist in Fig. 2 das dem Filterkörper 10 zugeordnete Filtergehäuse, gegen das der Filterkörper 10 im Ausführungsbeispiel über einen umfangsseitigen Rand 12 abgestützt ist, der, bezogen auf die rohgasseitige Anströmung (Pfeil 13) und die reingasseitige Abströmung (Pfeil 14), im Bereich der Trennebene, insbesondere der Trennebene zugeordnet zwischen Rohgas- und Reingasseite liegt, wobei im Bereich dieser Trennebene auch die Taschenöffnungen 15 der Filtertaschen 11 liegen, wie aus Fig. 3 erkennbar. Fig. 2 lässt erkennen, dass der Filterkörper 10 aus einer Vielzahl von Filtertaschen 11 aufgebaut ist, wobei sich neben der dargestellten rotationssymmetrischen Form auch Ovalformen sowie auch im Umfang teilweise eingezogene Filterkörperformen realisieren lassen, Letzteres beispielsweise durch unterschiedliche Größen der Filtertaschen 11.

Die Filtertaschen 11 weisen bevorzugt eine mit Durchgangsöffnungen versehene Tragstruktur, beispielsweise und bevorzugt aus Streckmetall auf, auf die die poröse, metallische Filterfläche aufgesintert ist. Hierbei kann es sich als zweckmäßig erweisen, insbesondere Flächen der Tragstruktur, also beispielsweise Knotenflächen des Streckmetalls als Beaufschlagungsflächen für den oder die die Heizquelle bildenden Heizstrahler vorzusehen, so dass diese Flächen Reflexionsflächen bilden können, in deren Bereich eine besonders intensive Aufheizung des Rußbelages stattfindet. Gegebenenfalls können entsprechende Flächen, beispielsweise durch eine aufgeraute Oberflächenstruktur, auch eine besonders intensive Aufheizung erfahren, so dass sie 'Glühpunkte' bilden, von denen aus die Rußverbrennung fortschreitet.

Bezogen auf das dargestellte Ausführungsbeispiel ist ein Filterkörper 10 gegeben, der aus etwa 50 (fünfzig) aneinander anschließenden Filtertaschen 11 aufgebaut ist, so dass sich für diese, bezogen auf den rotationssymmetrischen Aufbau, ein radial nach außen öffnender Keilwinkel $\alpha$ - siehe Fig. 3 - von etwa 7° ergibt. Die axiale Taschenlänge ist mit L bezeichnet und entspricht im Ausführungsbeispiel etwa der doppelten Höhe H der Filtertasche 11 bzw.

von deren Taschenöffnung 15. Hieraus ergibt sich ein gegen die Taschenöffnung 15 öffnender Keilwinkel β von etwa 3 bis 4°. Die im Bereich der Taschenöffnung 15 gegebene Keilrückenbreite B, und damit die Breite der Rückwand 17 der Filtertasche 11 im Bereich der Taschenöffnung 15 liegt etwa beim achten Teil der Höhe H der Filtertasche 11. Bezogen auf einen Filterkörper mit etwa 60 (sechzig) Filtertaschen 11 ergibt sich ein radial nach außen öffnender Keilwinkel α von etwa 6° und es erweist sich eine Auslegung als zweckmäßig, bei der die Keilrückenbreite B der Filtertasche 11 im Bereich der Taschenöffnung 15 zwischen dem sechsten und dem achten Teil der Höhe H der Filtertasche 11 liegt.

Im Rahmen der Erfindung erweisen sich mit Rußabbrennung arbeitende Partikelfilter insbesondere in einer Ausgestaltung als zweckmäßig, bei der die Filtertaschen 11 um ein Zentrum gruppiert sind und in Annäherung rotationssymmetrisch oder oval gestaltet sind, wobei die keilförmigen Filtertaschen 11 Keilrückenbreiten B zwischen 5 bis 12 mm, bevorzugt zwischen 6 bis 8 mm aufweisen. Dies insbesondere in Verbindung mit Abmessungen, bei denen ein Filterkörper 10 aus Filtertaschen 11 mit Keilrückenbreiten zwischen 5 und 12 mm, insbesondere 6 bis 8 mm ausgebildet ist, wobei die Zahl n der Filtertaschen 11 zum Durchmesser D in mm des Filterkörpers 10 im Bereich von

$$0,26 \times D < n < 0,52 \times D$$

liegt.

In analoger Weise gilt dies auch für hier nicht dargestellte Filterkörper mit unrundem Umfang, wenn als äquivalent zu deren jeweiligen Filterfläche einer Filterfläche gleicher Größe für Filterkörper mit Kreisquerschnitt bzw. Kreisringquerschnitt mit kleinem, durch das Zusammenlaufen der Filtertaschen bedingten Kern angesetzt wird und umgekehrt, so dass unterschiedliche Formkonfigurationen von Filterkörpern im Rahmen der erfindungsgemäßen Verwendung von keilförmigen Filtertaschen ohne größeren Versuchs- und Erprobungsaufwand gestaltet werden können.

Ferner erweist sich insbesondere bei entsprechender Anzahl von Filtertaschen 11 ein sich gegen die Taschenöffnung 15 öffnender Keilwinkel β als zweckmäßig, für den gilt: 1° < α < 4,5°, und dies insbesondere in Verbindung mit Keilfiltertaschen, bei denen die Keilrückenbreite B im Bereich der Filtertaschenöffnung 15 zur Filtertaschenlänge L in folgendem Verhältnis steht:

$$10 < L / B < 80,$$

insbesondere

$$10 < L / B < 60.$$

Des Weiteren erweist sich eine Festlegung der Gesamtfilterfläche F im Verhältnis zur maximal über den Filterkörper 10 strömenden Luftmasse m als zweckmäßig, für die gilt:

$$200 < m / F < 350,$$

wobei die Luftmasse m in kg/h und die Filterfläche F in m² erfasst wird.

Mit einem derart optimierten Filterkörper 10 ergeben sich auch unter Kostengesichtspunkten besonders vorteilhafte Ergebnisse, wobei für die Praxis besonders interessanter, mittlerer Bereich erfindungsgemäß bei

$$250 < m / F < 270.$$

liegt.

Ein derartig ausgelegter Partikelfilter erweist sich für aufgeladene Fahrzeug-Dieselmotoren mit einem Hubvolumen von etwa 2.000 cm³ , einem maximalen Luftmassendurchsatz von 450 kg/h und einer Filterfläche von 1,7 m² als besonders zweckmäßig, wobei etwa 60 Filtertaschen 11 vorgesehen sind, deren Länge L bei 250 mm liegt, bei einer Keilrückenbreite B von etwa 7 mm und einer Höhe H von etwa 60 mm.

In dem Ausführungsbeispiel gemäß Fig. 2 und 3 sind die Filtertaschen 11 zu einem Filterkörper 10 verbunden, der einen geschlossenen Kern aufweist, so dass die rohgasseitige Anströmung lediglich axial und radial von außen erfolgen kann.

Im Rahmen der Erfindung liegen aber auch Ausgestaltungen mit offenem Kern, beispielsweise bei Abstützung der Filtertaschen in der Trennebene zwischen Rohgasseite und Reingasseite radial innen und außen, und bei rohgasseitiger Abstützung lediglich radial außen, so dass sich ungeachtet der radial inneren Zusammenführung der Filtertaschen 11 auch eine gewisse Anströmung aus dem radial innen liegenden Kernbereich ergibt.

Die Fig. 2 und 3 lassen über die bereits geschilderte Ausgestaltung der Filtertaschen 11 hinaus auch erkennen, dass diese gegenüberliegend zu ihrer die dreiecksförmige Taschenöffnung 15 enthaltenden Stirnseite in einer keilschneidenartigen Stirnseite 18 zusammenlaufen, und dass ebenso die der Rückwand 17 gegenüberliegende Längsseite quasi eine Keilschneide bildet, in der die Seitenwände 20 zusammenlaufen. In Ansicht auf die Seitenwände 20 weist die Filtertasche 11 Rechteckform auf.

Die Fig. 4 bis 11 zeigen stark schematisierte Darstellungen, in den Fig. 4, 6, 8 und 10 jeweils eine Ansicht einer Seitenwand 20, wobei lediglich deren gegen die Öffnungsebene der Filtertaschen 11 auslaufende Teillänge dargestellt ist. Der dieser Teillänge entsprechende Längenbereich der Filtertasche 11 in Fig. 2 ist durch den Pfeil 21 symbolisiert. Bevorzugt entspricht dieser Längenbereich der Filtertasche 11 etwa der halben Länge L der Filtertasche oder ist kleiner als die halbe Länge L der Filtertasche 11.

Die Fig. 5, 7, 9 und 11 symbolisieren jeweils die Draufsicht zwischen zwei nebeneinander liegende Filtertaschen 11 und zeigen stark vereinfacht die Lage der insbesondere als Strahler berührungsfrei auf die jeweiligen Seitenwände 20 bzw. die Rückwände 17 einwirkenden Heizelemente 22, die im Ausführungsbeispiel gemäß Fig. 4 und 5 durch Heizstäbe 23, insbesondere Flachheitsstäbe 23 gebildet sind. Die Heizstäbe 23 sind, zur Veranschaulichung, in einem angedeuteten Gehäuse 24 des Partikelfilters 5 gehalten, so dass die Energiezufuhr von außerhalb des Gehäuses 24 und damit geschützt erfolgen kann, wie durch die Leitungen 25 symbolisiert. Die Heizstäbe 23 ragen jeweils in den von nebeneinander liegenden Filtertaschen 11 begrenzten Gegenraum 26 hinein, der sich entsprechend der Keilform der Filtertaschen 11, in Gegenrichtung, d. h. entgegen der rohgasseitigen Anströmung - Pfeil 13 - erweitert und sie erstrecken sich radial zur Achse 27 des Filterkörpers 10 im Wesentlichen über den radial äußeren Teil der Höhe H der Filtertaschen 11, wobei die Heizelemente 22, wie veranschaulicht, über der Länge L der Filtertaschen im gegen die Ebene der Taschenöffnungen 15 auslaufenden Teilbereich 23 insbesondere nahe der Ebene der Filtertaschenöffnungen 15 angeordnet sind.

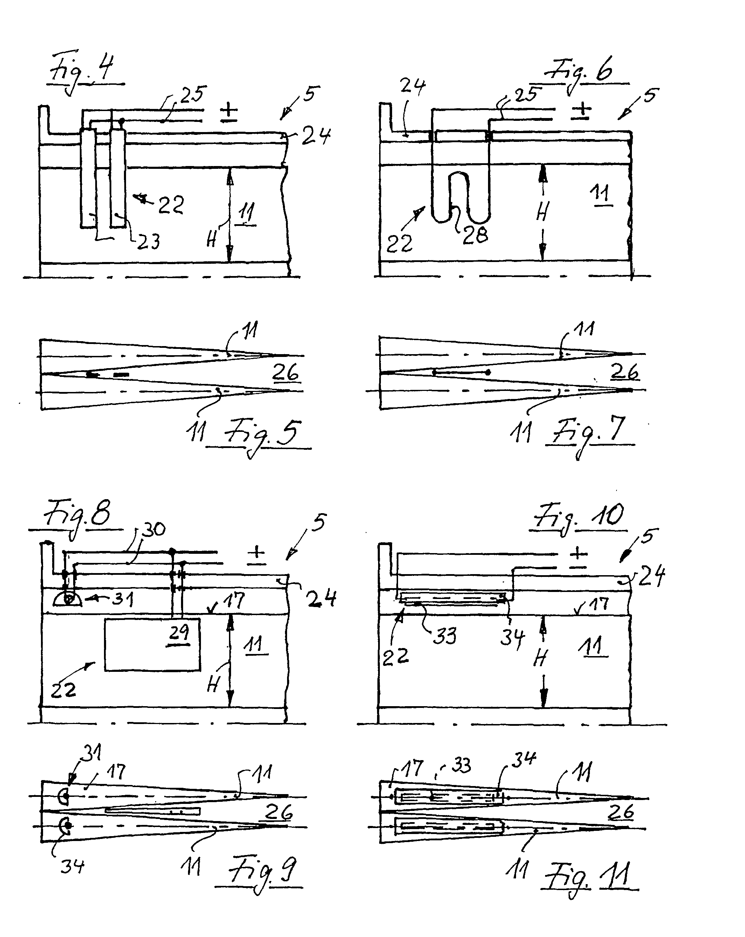

Eine entsprechende Ausgestaltung zeigen auch die Fig. 6 und 7, wobei hier als Heizelement 22 eine Heizschlange 28 vorgesehen ist, bei ansonsten gleichem Aufbau wie in Fig. 4 und 5, entsprechend der dortigen Beschreibung.

Fig. 8 und 9 veranschaulichen weitere Ausgestaltungen von Heizelementen 22, wobei ein Heizelement in Form eines Flächenstrahlers 29 vorgesehen ist, der sich in Längsrichtung der Filtertaschen 11 in dem von diesen eingeschlossenen Gegenraum 26 erstreckt, wobei der Einfachheit halber auch hier eine radiale Energiezuführung über Leitungen 30 vorgesehen ist, gegebenenfalls mit einer entsprechenden radialen Halterung. Nicht gezeigt ist, dass auch eine sich in Längsrichtung erstreckende Halterung im Rahmen der Erfindung liegt.

Der Einfachheit halber mit einbezogen in die Darstellung gemäß Fig. 8 und 9 ist eine Ausgestaltung einer Heizquelle 22 als radialer Strahler 31, der im Gegensatz zum Flächenstrahler 29 nicht im Gegenraum 26 liegt, bzw. in diesen eintaucht, sondern der umfangsseitig zum Filterkörper 10, insbesondere der Rückwand 17 einer Filtertasche 11 gegenüberliegend angeordnet ist und für den die Rückwand 17 im Wesentlichen die bestrahlte Fläche bildet, wobei auch hier die gezeigte Anordnung bezogen auf die Länge L der jeweiligen Filtertasche 11 nur der Veranschaulichung dessen dient, dass die Beheizung zur Entflammung des Rußes insbesondere in dem auf die Filtertaschen 15 auslaufenden Längsbereich des Filterkörpers 10 erfolgt.

Eine entsprechende umfangsseitige Beaufschlagung bevorzugt mit dem Bereich der Rückwand der Filtertaschen 11 zugeordneter, dieser gegenüberliegender und auf diese ausgerichteter Heizquelle 22 zeigt Fig. 10, wobei die Heizquelle 22 in diesem Fall jeweils durch einen stabförmigen Strahler 33 gebildet ist, im Gegensatz zur Ausbildung des Strahlers 31 in den Fig. 8 und 9, der als punktartige Heizquelle gestaltet ist, etwa in Analogie zu einer durch einen Laser gebildeten punktartigen Heizquelle. Veranschaulicht ist sowohl in den Fig. 8 und 9 wie auch in den Fig. 10 und 11, dass dem umfangsseitig zur jeweiligen Filtertasche 11 liegenden Strahler 31 bzw. 33 bevorzugt ein Reflektor 34 zur Bündelung der jeweiligen Strahlung zugeordnet sein kann, gleichzeitig auch zur Abschirmung des Gehäuses 24, sowie gegebenenfalls auch in einer Ausgestaltung, was hier nicht gezeigt ist, als Leitkörper für das gegen die Filtertaschen 11 anströmende Rohgas, wobei die Ausbildung dieses Leitkörpers sowohl dem Schutz der Heizquelle 22 gegen die unmittelbare Beaufschlagung mit Rußpartikel dienen kann, wie auch der Schwerpunktsbildung im Hinblick auf die Rußbeladung der Filtertasche im Einstrahlbereich der jeweiligen Heizquelle 22.

Aktiviert ist die jeweilige Heizquelle 22 bei der erfindungsgemäßen Lösung bevorzugt nur kurzzeitig, etwa für einen Zeitraum von bis zu 3 Minuten, und es erfolgt dann die weitere Rußabbrennung durch Fortschreiten einer Glüh- oder Flammfront in der Rußschicht. Im Hinblick sowohl auf günstige Zündbedingungen wie auch auf eine möglichst kontinuierliche Abbrennung durch Flammenübertragung mit Erfassung des jeweils angestrebten Bereiches erweist es sich im Rahmen der Erfindung als vorteilhaft, die angesprochenen, Zünd- und/oder Vertrennung fördernden Maßnahmen auf den Zündzeitraum bzw. den Zeitraum der Abbrennung abzustimmen, wobei insbesondere die Abbrennung über solche Maßnahmen letztlich auch gesteuert werden kann. Hierzu können die Abbrennung fördernde Maßnahmen überlagert sein, wie beispielsweise die Aufheizung der Rohgase über die bereits angesprochenen Maßnahmen innermotorischer Art oder auch die Erhöhung des Sauerstoffanteiles durch zusätzliche Luftzufuhr. In entsprechender Weise ist eine Beeinflussung in Gegenrichtung zur Verlangsamung oder zur Beendigung des jeweiligen Abbrennvorganges möglich, wobei auch diesbezüglich Kombinationen der einzelnen Maßnahmen, die in den Ansprüchen, so wie teilweise auch in der vorausgegangenen Beschreibung im Einzelnen angesprochen sind, möglich und zweckmäßig sind.

Der durch Strahlung insgesamt beaufschlagte Flächenanteil an der Gesamtfilterfläche liegt erfindungsgemäß bei 0,5 - 30 %, insbesondere bei 0,5 bis 10 % der Gesamtfilterfläche, so dass die durch elektrische Beheizung insgesamt eingebrachte, der Rußentflammung dienende Energie lediglich auf einen kleinen bis sehr kleinen Teil der Filterfläche wirkt, mit entsprechend hoher Leistungsdichte bei kleinem Energieverbrauch. Besonders deutlich wird dies dadurch, dass erfindungsgemäß mit Vorteil die Rückenwände 17 eines Teiles der Filtertaschen 11 als bestrahlte Flächen dienen und in diesem Fall der insgesamt durch Strahlung getroffene Flächenanteil lediglich bei 0,1 bis 10 %, insbesondere bei bis zu 4 % der durch die Rückenwände 17 aller Filtertaschen 11 des Filterkörpers 10 gebildeten umfangsseitigen Filterfläche liegt.

**Patentansprüche**

1.  Mit Rußabbrennung arbeitender Partikelfilter (5) für Dieselmotoren (1), der einen Filterkörper (10) mit zwischen anströmseitiger Rohgas- und abströmseitiger Reingasseite liegender Filterfläche aufweist und der zur Regeneration mit durch eine auf der Rohgasseite vorgesehene elektrische Heizquelle (22) ausgelöster Rußabbrennung arbeitet, wobei der die Filterfläche belegende Ruß lediglich über einen Bruchteil der Filterfläche durch die rohgasseitige, berührungsfreie Einwirkung der als Heizstrahler (23, 28, 29, 31, 33) ausgebildeten Heizquelle (22) gezündet wird und wobei die Rußabbrennung auf der Filterfläche ausgehend von dem durch die Heizquelle (22) beaufschlagten Zündbereich durch Flammübertragung in der Rußschicht erfolgt,
    **dadurch gekennzeichnet,**
    **dass** der Filterkörper (10) aus keilförmigen Filtertaschen (11) mit Filterflächen aus Sintermetall aufgebaut ist, dass die Filtertaschen (11) bezüglich ihres Öffnungsquerschnittes einer gemeinsamen Ebene zugewandt sind und sich bei ihren dreiecksförmigen Stirnseiten zugeordneten Taschenöffnungen (15) und ihren dreiecksförmigen, dem Außenumfang des Filterkörpers (10) zugeordneten Rücken (17) gegen die den Taschenöffnungen (5) gegenüberliegenden Stirnseiten sowie gegen die zwischen den Stirnseiten verlaufenden, den Rücken (17) gegenüberliegenden Längskanten verjüngen und dass die durch wenigstens einen Heizstrahler (31, 33) gebildete Heizquelle (22) im gegen die Öffnungsquerschnittsebene der Filtertaschen (11) auslaufenden Längsteilbereich des Filterkörpers (10) angeordnet und gegen die dem rohgasseitigen Außenumfang des Filterkörpers (10) zugeordneten Rücken (17) der Filtertaschen (11) gerichtet ist.

2.  Mit Rußabbrennung arbeitender Partikelfilter nach Anspruch 1,
    **dadurch gekennzeichnet,**
    **dass** dem Heizstrahler (31, 33) ein Reflektor (34) zugeordnet ist.

3.  Mit Rußabbrennung arbeitender Partikelfilter nach Anspruch 1,
    **dadurch gekennzeichnet,**
    **dass** der Heizstrahler (31, 33) und/oder die durch dessen Strahlung getroffene Filterfläche in einem durch eine zugeordnete Abschirmung gebildeten Windschattenbereich liegen.

4.  Mit Rußabbrennung arbeitender Partikelfilter nach Anspruch 1,
    **dadurch gekennzeichnet,**
    **dass** als Heizquelle (22) ein Heizstrahler (31, 33) vorgesehen ist, der mindestens einem mehrere Filtertaschen (11) umfassenden Sektor des Filterkörpers (10) zugeordnet ist.

5.  Mit Rußabbrennung arbeitender Partikelfilter nach Anspruch 4,
    **dadurch gekennzeichnet,**
    **dass** über den Umfang des Filterkörpers (10) mehrere zueinander beabstandete Heizsektoren vorgesehen sind.

6.  Mit Rußabbrennung arbeitender Partikelfilter nach Anspruch 1,
    **dadurch gekennzeichnet,**
    **dass** das Abbrennen des Rußes für jeweils vorgegebene Bereiche zeitlich versetzt durchgeführt wird.

7.  Mit Rußabbrennung arbeitender Partikelfilter nach Anspruch 1,

**dadurch gekennzeichnet,**
**dass** bei umfangsseitig zum Filterkörper (10) angeordnetem Heizstrahler (31, 33) die Filtertaschen (11) um ein gemeinsames Zentrum gruppiert sind.

**8.** Mit Rußabbrennung arbeitender Partikelfilter nach Anspruch 1,
**dadurch gekennzeichnet,**
**dass** der Heizstrahler (23, 28, 29) zwischen die Filtertaschen (11) eintauchend angeordnet ist.

**9.** Mit Rußabbrennung arbeitender Partikelfilter nach Anspruch 1,
**dadurch gekennzeichnet,**
**dass** die auf den Filterkörper (10) einwirkende, durch die Heizquelle (22) aufgebrachte Heizleistung als spezifische Heizleistung $P_{spez}$ bezogen auf die durch Strahlung getroffene Fläche im Bereich von

$$20 \leq P_{spez} \leq 100KW/m^2$$

liegt.

**10.** Mit Rußabbrennung arbeitender Partikelfilter nach Anspruch 1,
**dadurch gekennzeichnet,**
**dass** der von der durch jeweils zumindest einem Heizstrahler (31, 33) gebildeten Heizquelle (22) durch Strahlung insgesamt getroffene Flächenanteil bei 0,5 bis 10 % der Gesamtfilterfläche liegt.

**11.** Mit Rußabbrennung arbeitender Partikelfilter nach Anspruch 10 oder 11,
**dadurch gekennzeichnet,**
**dass** der von der Heizquelle (22) insgesamt durch Strahlung getroffene Flächenanteil bei 0,1 bis 10 %, insbesondere bei bis zu 4 % der durch die Rückenwände (17) der Filtertaschen (11) des Filterkörpers (10) gebildeten umfangsseitigen Filterfläche liegt.

**12.** Mit Rußabbrennung arbeitender Partikelfilter nach Anspruch 1,
**dadurch gekennzeichnet,**
**dass** unterschiedlichen Sektoren des Filterkörpers (10) zugeordnete Heizstrahler (31, 33) zeitbegrenzt alternierend angesteuert sind.

**Claims**

**1.** Particulate filter (5) operating with particulate burn-off for diesel engines (1), which has a filter body (10) with a filter surface located between the untreated-gas side on the inflow side and the clean-gas side on the outflow side, and which, in order to be regenerated, operates with particulate burn-off initiated by an electrical heating source (22) provided on the untreated-gas side, the particulates which cover the filter surface being ignited only over a fraction of the filter surface by the contact-free action, on the untreated-gas side, of the heating source (22), which is designed as a heating radiator (23, 28, 29, 31, 33), and the particulate burn-off on the filter surface taking place starting from the ignition region acted on by the heating source (22) by flame transfer through the layer of particulates, **characterized in that** the filter body (10) is composed of wedge-shaped filter pockets (11) with filter surfaces made from sintered metal, **in that** the filter pockets (11) face a common plane with regard to their opening cross section and narrow at their triangular pocket openings (15), assigned to end sides, and their triangular spines (17), assigned to the outer circumference of the filter body (10), towards the end sides on the opposite side from the pocket openings (5) and towards the longitudinal edges which run between the end sides and are on the opposite side from the spines (17), and **in that** the heating source (22), which is formed by at least one heating radiator (31, 33), is arranged in the longitudinal subregion of the filter body (10) which runs out towards the opening cross-sectional plane of the filter pockets (11) and is directed towards the spines (17), assigned to the outer circumference of the filter body (10) on the untreated-gas side, of the filter pockets (11).

**2.** Particulate filter which operates with particulate burn-off according to Claim 1, **characterized in that** the heating radiator (31, 33) is assigned a reflector (34).

**3.** Particulate filter which operates with particulate burn-off according to Claim 1, **characterized in that** the heating radiator (31, 33) and/or the filter surface which is affected by its radiation is/are located in a region which is shadowed from the wind, formed by an associated shield.

4. Particulate filter which operates with particulate burn-off according to Claim 1, **characterized in that** the heating source (22) provided is a heating radiator (31, 33) which is assigned to at least one sector, comprising a plurality of filter pockets (11), of the filter body (10).

5. Particulate filter which operates with particulate burn-off according to Claim 4, **characterized in that** a plurality of heating sectors which are spaced apart from one another are provided over the circumference of the filter body (10).

6. Particulate filter which operates with particulate burn-off according to Claim 1, **characterized in that** the burning-off of the particulates is carried out at offset times for respective predetermined regions.

7. Particulate filter which operates with particulate burn-off according to Claim 1, **characterized in that** with the heating radiator (31, 33) arranged on the circumferential side with respect to the filter body (10), the filter pockets (11) are grouped around a common centre.

8. Particulate filter which operates with particulate burn-off according to Claim 1, **characterized in that** the heating radiator (23, 28, 29) is arranged such that it penetrates in between the filter pockets (11).

9. Particulate filter which operates with particulate burn-off according to Claim 1, **characterized in that** the heating power which acts on the filter body (10) and is applied by the heating source (22), as specific heating power $P_{spec}$, based on the surface area affected by radiation, is in the range from

$$20 \leq P_{spec} \leq 100 \text{ KW/m}^2.$$

10. Particulate filter which operates with particulate burn-off according to Claim 1, **characterized in that** the total proportion of the surface area which is affected by radiation from the heating source (22) formed by in each case at least one heating radiator (31, 33) amounts to from 0.5 to 10% of the total filter surface area.

11. Particulate filter which operates with particulate burn-off according to Claim 10 or 11, **characterized in that** the total proportion of the surface area which is affected by radiation from the heating source (22) amounts to from 0.1 to 10%, in particular up to 4%, of the circumferential-side filter surface area formed by the spine walls (17) of the filter pockets (11) of the filter body (10).

12. Particulate filter which operates with particulate burn-off according to Claim 1, **characterized in that** heating radiators (31, 33) which are assigned to different sectors of the filter body (10) are actuated alternately for a limited time.

**Revendications**

1. Filtre à particules (5) travaillant par combustion des suies pour moteurs Diesel (1), lequel présente un corps de filtration (10) entre la surface de filtration se trouvant du côté des gaz non épurés qui arrivent et du côté des gaz purs qui partent et lequel travaille, pour la régénération, par combustion des suies déclenchée par une source de chaleur (22) électrique disposée du côté des gaz non épurés, la suie reposant sur les surfaces de filtration étant enflammées uniquement sur une partie de la surface de filtration grâce à l'effet sans contact, côté des gaz non épurés, de la source de chaleur (22) réalisée en tant que radiateur (23, 28, 29, 31, 33) et la combustion de la suie sur la surface de filtration à partir de la zone d'allumage soumise à la source de chaleur (22) se produisant dans la couche de suie par propagation de la flamme, **caractérisé en ce que** le corps de filtration (10) est fabriqué à partir de poches de filtration (11) en coin avec des surfaces de filtration en métal fritté, **en ce que** les poches de filtration (11) tournent leur section transversale d'ouverture vers un plan commun et se réduisent, avec leurs ouvertures de poches (15) associées à des côtés frontaux triangulaires et leurs faces arrière (17) triangulaires associées au périmètre extérieur du corps de filtration (10), vers les faces frontales opposées aux ouvertures de poche (5) ainsi que vers les bords longitudinaux s'étendant entre les faces frontales et opposées aux faces arrière (17) et **en ce que** la source de chaleur (22) d'au moins un radiateur (31, 33) est disposée dans la zone partielle longitudinale du corps de filtration (10) s'étendant vers le plan des sections transversales d'ouverture des poches de filtration (11) et tournée vers les faces arrière (17) des poches de filtration (11), associées au périmètre extérieur, côté des gaz non épurés, du corps de filtration (10).

2. Filtre à particules travaillant par combustion de la suie selon la revendication 1, **caractérisé en ce qu'**un réflecteur (34) est associé au radiateur (31, 33).

3. Filtre à particules travaillant par combustion de la suie selon la revendication 1, **caractérisé en ce que** le radiateur (31, 33) et/ou la surface de filtration concernée par ce rayonnement se situent dans une zone abritée grâce à la présence d'une protection.

4. Filtre à particules travaillant par combustion de la suie selon la revendication 1, **caractérisé en ce qu'**un radiateur (31, 33) est prévu en tant que source de chaleur (22), lequel est associé à au moins un secteur du corps de filtration (10) entourant plusieurs poches de filtration (11).

5. Filtre à particules travaillant par combustion de la suie selon la revendication 4, **caractérisé en ce que** plusieurs secteurs de chauffe écartés les uns des autres sont prévus sur le périmètre du corps de filtration (10).

6. Filtre à particules travaillant par combustion de la suie selon la revendication 1, **caractérisé en ce que** la combustion de la suie est effectuée de manière décalée dans le temps pour chacune des zones prédéterminées.

7. Filtre à particules travaillant par combustion de la suie selon la revendication 1, **caractérisé en ce qu'**en cas de radiateurs (31, 33) disposés sur la périphérie du corps de filtration (10), les poches de filtration (11) sont groupées autour d'un centre commun.

8. Filtre à particules travaillant par combustion de la suie selon la revendication 1, **caractérisé en ce que** le radiateur (23, 28, 29) est disposé, de manière plongeante, entre les poches de filtration (11).

9. Filtre à particules travaillant par combustion de la suie selon la revendication 1, **caractérisé en ce que** la puissance thermique agissant sur le corps de filtration (10) et générée par la source de chaleur (22) se situe, sous la forme de puissance thermique spécifique $P_{spez}$ ramenée à la surface concernée par le rayonnement, dans une plage de 20 <= $P_{spez}$ <= 100 kW/m$^2$.

10. Filtre à particules travaillant par combustion de la suie selon la revendication 1, **caractérisé en ce que** la proportion de surface totale concernée par le rayonnement de la source de chaleur (22) constituée chacune par au moins un radiateur (31, 33) se situe entre 0,5 et 10% de la surface totale.

11. Filtre à particules travaillant par combustion de la suie selon la revendication 10 ou 11, **caractérisé en ce que** la proportion de surface concernée au total par le rayonnement de la source de chaleur (22) se situe entre 0,1 et 10%, en particulier jusqu'à 4% de la surface de filtration, côté périphérique, constituée par les parois arrière (17) des poches de filtration (11) des corps de filtration (10).

12. Filtre à particules travaillant par combustion de la suie selon la revendication 1, **caractérisé en ce que** les radiateurs (31, 33) associés aux différents secteurs du corps de filtration (10) sont pilotés en alternance de manière limitée dans le temps.

_Fig. 1_

_Fig. 2_

Fig. 3

Fig. 4

25    ±

5

24

22

23

11

H

Fig. 5

11

26

11

Fig. 6

24    25    ±    5

H    11

22    28

Fig. 7

11

26

11

Fig. 8

30    5

±

31    17    24

29    11

22    H

Fig. 9

31    17    11

26

34    11

Fig. 10

±    5

24

17

33    34    11

22    H

Fig. 11

17    33    34    11

26

11